# EUROPÄISCHE PATENTSCHRIFT

(11) **EP 0 796 699 B1**
(45) Veröffentlichungstag und Bekanntmachung des Hinweises auf die Patenterteilung: **30.01.2002**
(21) Anmeldenummer: 96118988.3
(22) Anmeldetag: 27.11.1996
(51) Int. Cl.: B23Q 5/14

(54) **Spindelantrieb für eine Werkzeugmaschine**
Spindle drive for a machine tool
Entraînement des broches pour une machine outil

(30) Priorität: 22.03.1996 DE 19611459
(43) Veröffentlichungstag der Anmeldung: 24.09.1997
(73) Patentinhaber: Klement, Klaus-Dieter, 52428 Jülich (DE)
(72) Erfinder: Klement, Klaus-Dieter, 52428 Jülich (DE)
(74) Vertreter: Albrecht, Rainer Harald, Dr.-Ing.

(56) Entgegenhaltungen:
- DE-C- 4 201 849
- DE-U- 8 810 092

## Beschreibung

Die Erfindung betrifft einen Spindelantrieb für eine Werkzeugmaschine, - mit
einem Spindelgehäuse,
einer im Spindelgehäuse drehbar gelagerten Bearbeitungsspindel, die an ihrem vorderen Ende eine Werkzeugaufnahme zum Anschluß eines Werkzeugträgers oder Bearbeitungswerkzeuges aufweist,
einem Spindelmotor aus einem im Spindelgehäuse angeordneten Stator und einem auf der Bearbeitungsspindel drehbeweglich angeordneten Rotor und
einem Schaltgetriebe mit einer ersten Schaltstellung für eine Untersetzung ins Langsame sowie einer zweiten Schaltstellung für einen untersetzungsfreien Antrieb der Bearbeitungsspindel,
wobei das Schaltgetriebe als Planetengetriebe mit Sonnenrad, in einem Planetenträger angeordneten Planetenrädern sowie einem Hohlrad ausgebildet ist, wobei das Sonnenrad als Hohlwelle ausgebildet und mit dem Rotor verbunden ist und wobei in der ersten Schaltstellung das Sonnenrad mit den Planetenrädern kämmt, sowie der Planetenträger an die Bearbeitungsspindel angekuppelt ist.

Bei dem aus DE-C 42 01 849 bekannten Spindelantrieb, von dem die Erfindung ausgeht, ist der Planetenträger an der Bearbeitungsspindel befestigt. Das Hohlrad ist gegenüber dem Planetenträger axial verschiebbar angeordnet, und zwar zwischen einer im Spindelgehäuse drehfesten Schaltstellung und einer im Spindelgehäuse drehbeweglichen Schaltstellung für einen untersetzungsfreien Schnellaufbetrieb. Im untersetzungsfreien Schnellaufbetrieb nehmen der Planetenträger und das Hohlrad an der Rotation teil und rotieren zusammen mit der Bearbeitungsspindel um die Spindelachse. Der Planetenträger mit mehreren Planetenrädern sowie das Hohlrad haben eine beachtliche Masse. Bei hohen Drehzahlen, die im untersetzungsfreien Schnellaufbetrieb auftreten, werden große Zentrifugalkräfte wirksam, die bei unvermeidbaren Unwuchten Schwingungen der Bearbeitungsspindel und einen unruhigen Lauf der Bearbeitungsspindel verursachen. Die bekannte Anordnung ist ferner konstruktiv aufwendig. Das Hohlrad ist an den Planetenrädern - oder zusätzliche Wälzlager - zentriert. Hier treten Toleranzen auf, die insbesondere im untersetzungsfreien Schnellaufbetrieb unwuchten und damit störende Spindelschwingungen verursachen.

Bei Spindelantrieben, die aus der Praxis bekannt sind, ist der Rotor des Spindelmotors mittels eines Stufenpreßverbandes fest auf der Bearbeitungsspindel angeordnet. Der Spindelantrieb zeichnet sich durch einen einfachen konstruktiven Aufbau aus und ermöglicht sehr große Drehzahlen. Nachteilig ist das verhältnismäßig kleine Drehmoment im unteren Drehzahlbereich. Der Spindelantrieb ist ungeeignet, wenn an dem Bearbeitungswerkzeug große Schnittkräfte auftreten.

Ausgehend von dem eingangs erläuterten Stand der Technik liegt der Erfindung die Aufgabe zugrunde, einen Spindelantrieb mit Schaltgetriebe anzugeben, der sich durch einen einfachen Aufbau und eine große Laufruhe im untersetzungsfreien Schnellaufbetrieb auszeichnet.

Die Aufgabe wird bei einem Spindelantrieb des eingangs beschriebenen Aufbaus erfindungsgemäß dadurch gelöst, daß das Hohlrad und der Planetenträger mit den Planetenrädern eine im Spindelgehäuse drehfest angeordnete und zwischen den beiden Schaltstellungen axial verschiebbare Getriebeeinheit bilden und daß in der zweiten Schaltstellung die Verzahnung zwischen dem Sonnenrad und den Planetenrädern getrennt ist. Gemäß einer bevorzugten Ausführungsform der Erfindung weist die Getriebeeinheit eine im Planetenträger drehbeweglich gelagerte Kupplungshülse auf, die auf der Bearbeitungsspindel drehfest sowie mit der Getriebeeinheit axial verschiebbar auf der Bearbeitungsspindel angeordnet ist und in der zweiten Schaltstellung an eine Kupplungsfläche des Sonnenrades anschließt.

Der Kraftfluß wird von der antreibenden Hohlwelle am rückwärtigen Ende in die Bearbeitungsspindel eingeleitet. Dadurch, daß der Rotor bzw. eine mit dem Rotor verbundene Hohlwelle drehbar auf der Bearbeitungsspindel gelagert ist, resultiert ein kompakter Aufbau des Spindelantriebes. Stator, Rotor mit zugeordneter Hohlwelle sowie das Getriebe sind standardisierbare Bauteile bzw. Baugruppen, die nach Art eines Bausatzes zusammengestellt werden können. In der zweiten Schaltstellung drehen die Planetenräder nicht mit und ist das Getriebe gleichsam außer Betrieb gesetzt. Dadurch ist eine große Laufruhe der Bearbeitungsspindel bei hohen Drehzahlen gewährleistet. Soll die Bearbeitungsspindel mit kleinerer Drehzahl und hohem Drehmoment betrieben werden, so wird die Getriebeeinheit in die erste Schaltstellung gerückt. In dieser Schaltstellung drehen Rotor und Bearbeitungsspindel nach Maßgabe der Getriebeübersetzung mit unterschiedlichen Drehzahlen.

Im folgenden wird die Erfindung anhand einer lediglich ein Ausführungsbeispiel darstellenden Zeichnung ausführlich erläutert. Es zeigen schematisch
- Fig. 1: einen Längsschnitt durch einen Spindelantrieb für eine Werkzeugmaschine,
- Fig. 2: den Spindelantrieb aus Fig. 1 in einer anderen Betriebsstellung ebenfalls im Längsschnitt.

Zum grundsätzlichen Aufbau des in den Figuren dargestellten Spindelantriebs gehören ein Spindelgehäuse 1, eine drehbar in dem Spindelgehäuse 1 gelagerte Bearbeitungsspindel 2 sowie ein Spindelmotor 3 mit einem in dem Spindelgehäuse 1 angeordneten Stator 4 sowie einem Rotor 5. Die Bearbeitungsspindel 2 weist an ihrem vorderen Ende eine Werkzeugaufnahme zum Anschluß eines Werkzeugträgers 6 auf, und sie enthält eine übliche, den Werkzeugträger 6 erfassende Spanneinrichtung 7.

Der Rotor 5 ist auf der Bearbeitungsspindel 2 drehbeweglich angeordnet und unter Zwischenschaltung eines Getriebes 8 an die Bearbeitungsspindel 2 angeschlossen. Das Getriebe 8 ist an dem zur Werkzeugaufnahme abgewandten, rückwärtigen Ende der Bearbeitungsspindel 2 angeordnet und als schaltbares Planetengetriebe ausgeführt. Das Planetengetriebe umfaßt ein Sonnenrad 9, einen Planetenträger 10 mit Planetenrädern 11 sowie ein Hohlrad 12, wobei das Sonnenrad 9 als Hohlwelle ausgebildet und mit dem Rotor 5 festverbunden ist. Das Sonnenrad 9 ist freifliegend gelagert.

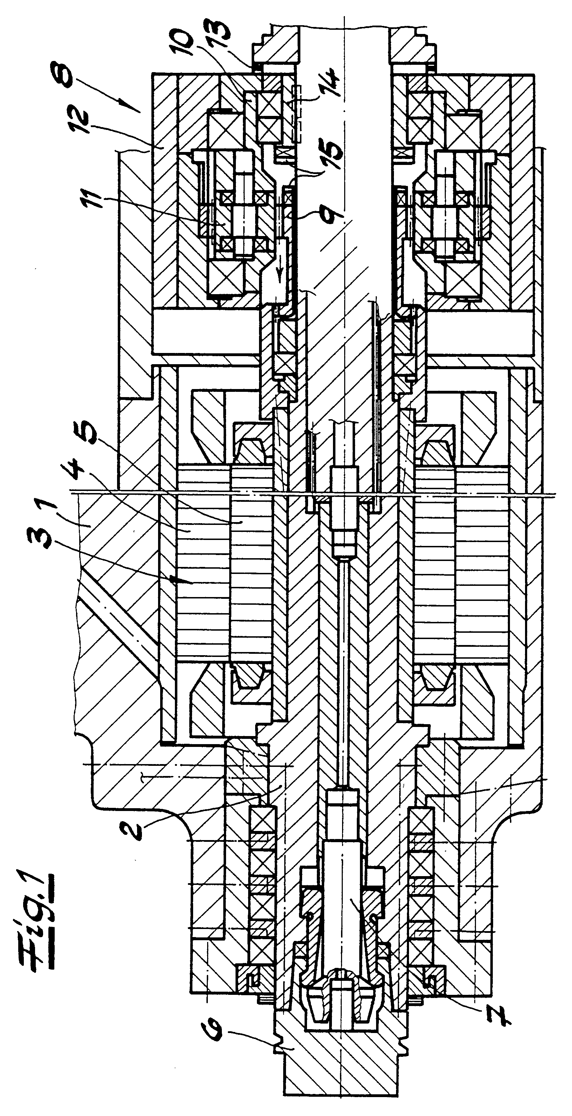

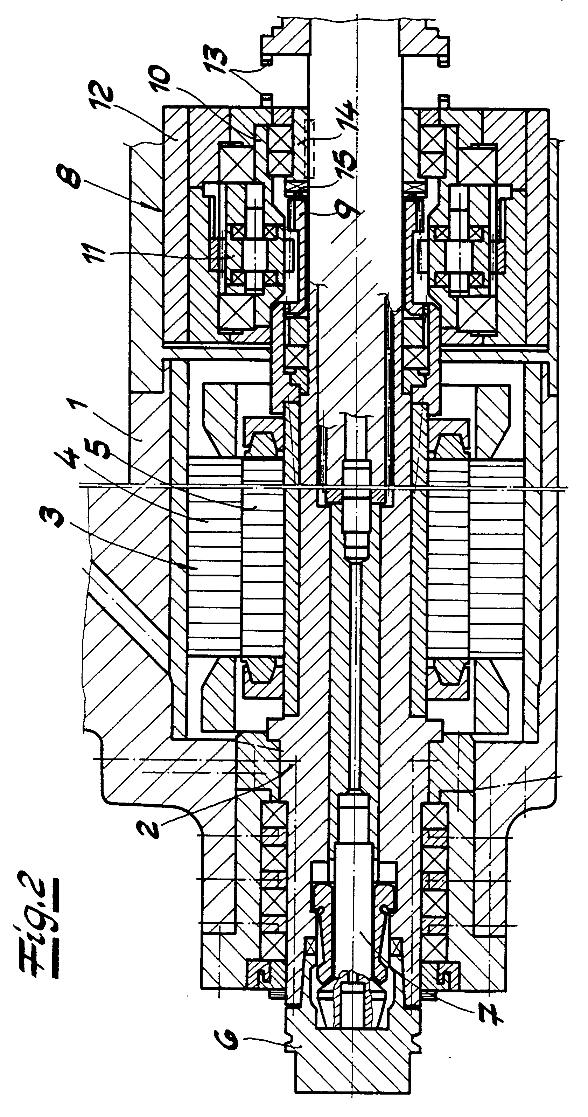

Das Hohlrad 12 und der Planetenträger 10 mit den Planetenrädern 11 bilden eine im Spindelgehäuse 1 zwischen zwei Schaltstellungen axial verschiebbare Getriebeeinheit. In der ersten, in Fig. 1 dargestellten Schaltstellung steht das Sonnenrad 9 mit den Planetenrädern 11 im Eingriff und ist der Planetenträger 10 durch eine stirnseitige Kupplungseinrichtung 13 mit der Bearbeitungsspindel 2 formschlüssig verbunden. Rotor 5 und Bearbeitungsspindel 2 drehen mit unterschiedlichen Drehzahlen nach Maßgabe des Übersetzungsverhältnisses des Planetengetriebes 8. Das Übersetzungsverhältnis (Rotor / Bearbeitungsspindel) ist dem Anwendungsfall angepaßt und kann beispielsweise 4 : 1 betragen. In der zweiten, in Fig. 2 dargestellten Schaltstellung der Getriebeeinheit ist die Verzahnung zwischen dem Sonnenrad 9 und den Planetenrädern 11 getrennt sowie das Sonnenrad 9 unmittelbar an die Bearbeitungsspindel 2 angekuppelt, so daß Rotor 5 und Bearbeitungsspindel 2 mit derselben Drehzahl rotieren. Die Verbindung zwischen dem Sonnenrad 9 und der Bearbeitungsspindel 2 erfolgt durch eine Kupplungshülse 14, die drehbeweglich im Planetenträger 10 gelagert ist und drehfest sowie axial verschiebbar auf der Bearbeitungsspindel 2 angeordnet ist. Sie ist Teil der Getriebeeinheit und mit dieser zusammen zwischen den Schaltstellungen bewegbar.

Der Fig. 2 entnimmt man, daß in der zweiten Schaltstellung Kupplungsflächen 15 der Kupplungshülse 14 und des Sonnenrades 9 ineinandergreifen.

## Patentansprüche

1. Spindelantrieb für eine Werkzeugmaschine, - mit
einem Spindelgehäuse (1),
einer im Spindelgehäuse (1) drehbar gelagerten Bearbeitungsspindel (2), die an ihrem vorderen Ende eine Werkzeugaufnahme zum Anschluß eines Werkzeugträgers (6) oder Bearbeitungswerkzeuges aufweist,
einem Spindelmotor (3) aus einem im Spindelgehäuse (1) angeordneten Stator (4) und einem auf der Bearbeitungsspindel drehbeweglich angeordneten Rotor (5) und
einem Schaltgetriebe mit einer ersten Schaltstellung für eine Untersetzung ins Langsame sowie einer zweiten Schaltstellung für einen untersetzungsfreien Antrieb der Bearbeitungsspindel (2),
wobei das Schaltgetriebe (8) als Planetengetriebe mit Sonnenrad (9), in einem Planetenträger (10) angeordneten Planetenrädern (11) sowie einem Hohlrad (12) ausgebildet ist, wobei das Sonnenrad (9) als Hohlwelle ausgebildet und mit dem Rotor (5) verbunden ist und wobei in der ersten Schaltstellung das Sonnenrad (9) mit den Planetenrädern (11) kämmt sowie der Planetenträger (10) an die Bearbeitungsspindel angekuppelt ist, **dadurch gekennzeichnet, daß** das Hohlrad (12) und der Planetenträger (10) mit den Planetenrädern (11) eine im Spindelgehäuse (1) drehfest angeordnete und zwischen den beiden Schaltstellungen axial verschiebbare Getriebeeinheit bilden und daß in der zweiten Schaltstellung die Verzahnung zwischen dem Sonnenrad (9) und den Planetenrädern (11) getrennt ist.

2. Spindelantrieb nach Anspruch 1, **dadurch gekennzeichnet, daß** die Getriebeeinheit eine im Planetenträger (10) drehbeweglich gelagerte Kupplungshülse (14) aufweist, die auf der Bearbeitungsspindel drehfest sowie mit der Getriebeeinheit axial verschiebbar auf der Bearbeitungsspindel (2) angeordnet ist und in der zweiten Schaltstellung an eine Kupplungsfläche (15) des Sonnenrades anschließt.

## Claims

1. A spindle drive for a machine tool, - comprising
a spindle housing (1),
a machining spindle (2) which is rotatably mounted in the spindle housing (1) and which at its front end comprises a tool holding fixture for the attachment of a tool holder (6) or of a machining tool,
a spindle motor (3) comprising a stator (4) disposed in the spindle housing (1) and a rotor (5) which is disposed on the machining spindle so that it can move in rotation, and
an indexing drive comprising a first indexing position for step-down to slow speed operation and comprising a second indexing position for driving the machining spindle (2) without step-down,
wherein the indexing gear (8) is constructed as a planet gear comprising a sun wheel (9), planet wheels (11) disposed in a planet wheel carrier (10), and a ring gear (12), wherein the sun wheel (9) is constructed as a hollow shaft and is attached to the rotor (5), and wherein in the first indexing position the sun wheel (,)
meshes with the planet wheels (11) and the planet wheel carrier (10) is coupled to the machining spindle, **characterised in that** the ring gear (12) and the planet wheel carrier (10), with the planet wheels (11), form a drive unit which is disposed fixed in rotation in the
spindle housing (1) and which is axially displaceable between the two indexing positions, and that in the second indexing position the gearing between the sun wheel (9) and the planet wheels (11) is disengaged.

2. A spindle drive according to claim 1, **characterised in that** the drive unit comprises a clutch sleeve (14) which is mounted in the planet wheel carrier (10) so that it can move in rotation, which clutch sleeve is disposed fixed in rotation on the machining spindle, is axially displaceable on the machining spindle (2) with the drive unit, and in the second indexing position is seated against a clutch face (15) of the sun wheel.

## Revendications

1. Commande de broche pour une machine-outil, comprenant
un carter de broche (1),
une broche d'usinage (2) qui est montée en rotation dans le carter de broche (1) et qui comporte, à son extrémité avant, un mandrin pour raccorder un porte-outil (6) ou un outil d'usinage,
un moteur de broche (3) constitué d'un stator (4) disposé dans le carter de broche (1) et d'un rotor (5) disposé avec une possibilité de rotation sur la broche d'usinage, et
un mécanisme de transmission avec une première position de transmission pour une démultiplication à une vitesse lente ainsi qu'une seconde position de transmission pour un entraînement non démultiplié de la broche d'usinage (2),
le mécanisme de transmission (8) étant conçu sous la forme d'un engrenage planétaire avec une roue solaire (9), avec des roues planétaires (11) disposées dans un porte-planétaires (10) ainsi qu'avec une roue à denture intérieure (12), la roue solaire (9) étant conçue sous la forme d'un arbre creux et reliée au rotor (5) et, dans la première position de transmission, la roue solaire (9) s'engrenant avec les roues planétaires (11) et le porte-planétaires (10) étant accouplé avec la broche d'usinage, **caractérisée en ce que** la roue à denture intérieure (12) et le porte-planétaires (10) avec les roues planétaires (11) forment une unité de transmission montée sans possibilité de rotation dans le carter de broche (1) et avec une possibilité de translation axiale entre les deux positions de transmission, et **en ce que**, dans la seconde position de transmission, la denture est partagée entre la roue solaire (9) et les roues planétaires (11).

2. Commande de broche selon la revendication 1, **caractérisée en ce que** l'unité de transmission comporte un manchon d'accouplement (14) qui est monté avec une possibilité de rotation dans le porte-planétaires (10) et qui est disposé sans possibilité de rotation sur la broche d'usinage ainsi qu'avec une possibilité de translation axiale avec l'unité de transmission sur la broche d'usinage (2) et, dans la seconde position de transmission, se raccorde à une surface d'accouplement (15) de la roue solaire.
